# EUROPEAN PATENT SPECIFICATION

(11) **EP 2 410 802 B1**
(45) Date of publication and mention of the grant of the patent: **25.07.2012**
(21) Application number: 10290415.8
(22) Date of filing: 21.07.2010
(51) Int. Cl.: H04W 72/04

(54) **Base station and method of operating a base station**
Basisstation und Verfahren zum Betreiben einer Basisstation
Station de base et son procédé de fonctionnement

(43) Date of publication of application: 25.01.2012
(73) Proprietor: Alcatel Lucent, 75007 Paris (FR)
(72) Inventor: Pascht, Andreas, 73635 Rudersberg (DE); Wiegner, Dirk, 71409 Schwaikheim (DE)
(74) Representative: Wetzel, Emmanuelle

(56) References cited:
- EP-A1- 2 150 086
- US-A1- 2008 248 803
- US-A1- 2010 130 138

## Description

### Field of the Invention

The invention relates to a method of operating a base station of a cellular communications network and a base station of a cellular communications network.

### Background

It is already known to provide energy improved amplifier concepts (e.g. Doherty or Envelope Tracking amplifiers) in the context of cellular communications networks which contribute to energy efficiency of respective transmitters comprising such energy improved amplifiers.

However, an overall energy efficiency of conventional cellular communications networks is still comparatively low.

Accordingly, it is an object of the present invention to provide a method of operating a base station of a cellular communications network and a base station of a cellular communications network which contribute to an increased energy efficiency.

EP 2 150 086 A1 discloses a method for radio resource allocation based on battery status information of user equipments.

US 2008/0248803 A1 discloses an apparatus and a method for allocating frequency resources in a communication system, wherein a radio cell is partitioned into different regions.

### Summary

This object is achieved by a method according to claim 1 and a base station according to claim 9.

The allocation of one or more communications resources to said terminal depending on said properties of said terminal advantageously enable the base station to operate with increased energy efficiency, because, depending on the specific communications scenario different communications resources may be used which account for the specific scenario.

According to an embodiment, said step of determining comprises at least one of: determining which communications standards are supported by said terminal, determining which frequency bands are supported by said terminal, whereby the base station may advantageously judge which frequency band and/or communications standard to chose for communicating with the terminal in an energy efficient manner. For instance, if the terminal supports various standards such as GSM (Global System for Mobile Communications), UMTS (Universal Mobile Telecommunications System), LTE (Long Term Evolution), LTE-advanced, WiMax (Worldwide Interoperability for Microwave Access), WLAN (Wireless Local Area Network), or even Bluetooth, the base station may chose any of these standards wherever appropriate. Obviously, with this embodiment, the base station should also be configured to support different standards as listed above.

According to a further embodiment, a required data rate or quality of service or further communications parameters may also be considered for the process of allocation of communications resources. If, e.g., only voice data is transmitted to/from the terminal, using the GSM standard may be appropriate, whereas using the UMTS or LTE standard is preferred for data transmissions requiring higher data rates.

According to a further embodiment, said step of determining comprises determining at least one of: a distance between said base station and said terminal, a relative speed of said terminal with respect to the base station, a remaining energy supply of said terminal for the communications with the base station. These and further physical parameters of the terminal may advantageously be considered for resource allocation, too, thus enabling a sophisticated resource allocation.

For instance, depending on the distance between base station and terminal, it is advantageous to select such modes of communication and/or communications standards which enable to select specific frequency bands for communicating with the terminal, because for large distances, usually lower carrier frequencies yield a better energy efficiency than higher carrier frequencies. Such higher carrier frequencies may e.g. be allocated to further terminals which are closer to the base station. Generally, the frequency bands used for transmission may be determined by the base station depending on the distance between base station and the terminal.

Moreover, according to an embodiment, it is also possible to consider the relative speed of a terminal for choosing an optimum communications resource regarding energy efficiency.

Additionally or alternatively, it is also possible to consider a remaining energy supply of said terminal for choosing an optimum communications resource regarding energy efficiency, which extends the inventive principle of energy efficient operation to the terminal.

Generally, according to a particularly preferred embodiment, one or more communications resources for communicating with said terminal are chosen depending on an energy efficiency associated with said communications resources. Preferably, if different communications resources such as standards (GSM, UMTS, ..), frequency bands, or modulation schemes are available, those resources, frequency bands, or modulation schemes are chosen which offer the best energy efficiency.

The energy efficiency may be represented by various parameters such as an electric input power of a transmitter of the base station divided by a radiated power of electromagnetic waves transmitted by said transmitter.

Of course, the energy efficiency may also be calculated on a per-user (i.e., per terminal) basis by the base station.

Control data which comprises information on the energy efficiency of different frequency bands and/or of different communications standards and their variants may also be stored in the base station and may be employed for the process of judging which communications resources to allocate to a terminal.

According to an embodiment, apart from allocating one or more communications standards such as GSM, UMTS, WLAN, .. to a terminal for future communications with the base station, specific frequency bands or modulation schemes or further characteristic parameters being associated with a specific energy efficiency may also be allocated to a terminal to ensure an operation with increased or even optimum energy efficiency.

According to another preferred embodiment, said base station determines a distance between the terminal and the base station and it further determines at least one of: a communications standard and a frequency band supported by said terminal for communicating with said base station. Then, said base station allocates at least one of a specific communications standard and a specific frequency band to said terminal depending on said distance.

Since the transmission range/coverage of the base station is among others depending on the frequency (lower frequencies usually support larger coverage) and on the transmit power, the idea is to allocate the transmit frequencies of the base station to the terminals, or users, respectively, in an efficiency optimized manner, taking the terminal's capabilities into account. This means, a user, which is located close to the base station will be connected via a higher frequency, while a user which is more far away from the base station will be connected via a lower frequency band. In relation to the number of connected users per frequency band, thus, the power can be suitably distributed among the users / terminals, which enables an operation of the base station with increased energy efficiency.

According to an embodiment, said base station allocates communications standards and/or frequency bands associated with a first carrier frequency to a first terminal and allocates communications standards and/or frequency bands associated with a second carrier frequency, which is lower than said first carrier frequency, to a second terminal, which is located further away from the base station than the first terminal, which advantageously accounts for the above mentioned frequency-dependency of the radio coverage.

According to an embodiment, said step of allocating is performed depending on an energy efficiency associated with a communications process with a specific terminal and/or depending on an overall energy efficiency associated with a plurality of communications processes with respective terminals. I.e., the optimized selection of communications resources may take into consideration an individual energy efficiency associated with specific terminals and/or an overall energy efficiency taking into account all terminals served by the base station.

A further solution to the object of the present invention is given by a base station according to claim 9. The base station is configured to: determine properties of at least one terminal that is capable of communicating with said base station, wherein said properties characterize at least one of: the communications capabilities of said terminal, at least one physical parameter of said terminal, and to allocate one or more communications resources to said terminal depending on said properties of said terminal.

Further advantageous embodiments of the invention are given in the dependent claims.

### Brief Description of the Figures

Further features, aspects and advantages of the present invention are given in the following detailed description with reference to the drawings in which:
- Figure 1: depicts a schematic communications scenario according to an embodiment,
- Figure 2: depicts a simplified block diagram of a base station according to an embodiment,
- Figure 3a: depicts a first embodiment of a method of operating a base station, and
- Figure 3b: depicts a second embodiment of a method of operating a base station.

### Description of the Embodiments

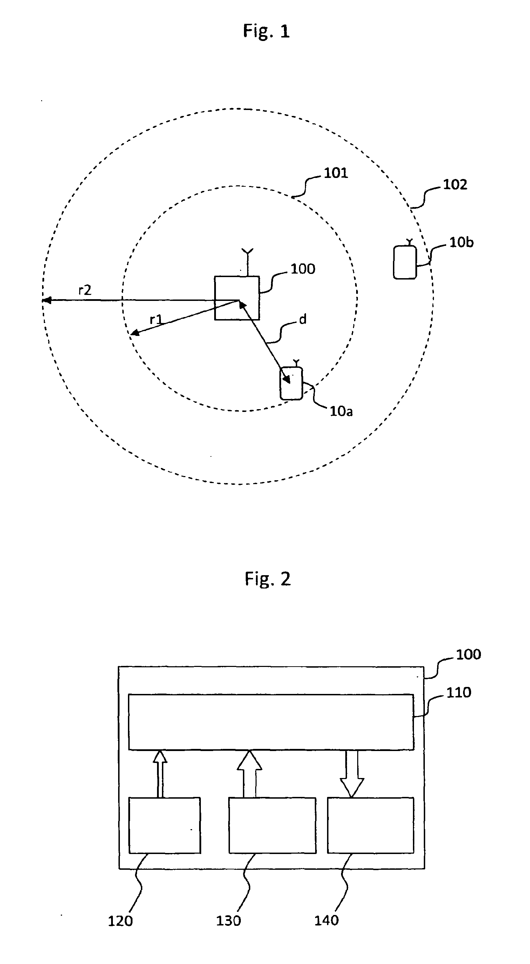

Figure 1 depicts a schematic communications scenario including a base station 100 of a cellular communications network and two user terminals 10a, 10b that are capable of communicating with the base station 100.

As such, base station 100 may e.g. be configured to perform conventional wireless communications processes with the terminals 10a, 10b, e.g. according to the GSM and/or UMTS standard or according to further standards. Base station 100 may also form part of a larger cellular network, further components of which (such as further base stations) are not depicted.

Alternatively, base station 100 may also define a "cellular" communications network only having those radio cell(s) that are provided by the base station 100 itself, i.e., there are no further base stations involved.

The inventive principle explained with reference to the Figures can be applied to any one of the aforementioned types of base stations 100, i.e. regardless of whether they belong to a larger cellular network having further base stations or they are operated in "isolation" with reference to further base stations and they define one or more radio cells.

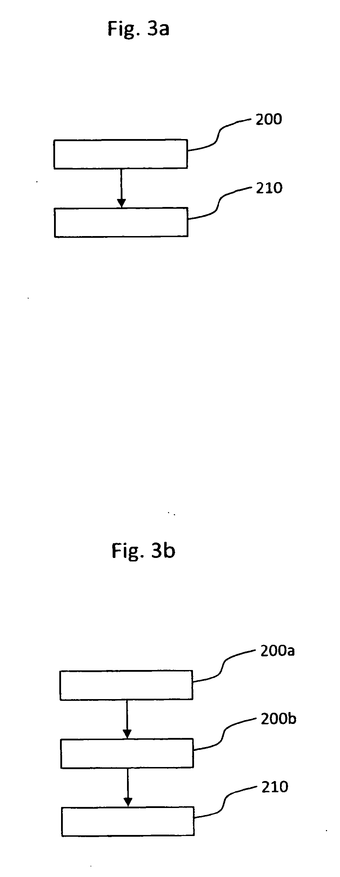

According to a preferred embodiment, in a first step 200 of operating said base station 100, cf. the flow-chart of Figure 3a, the base station 100 determines properties of at least one terminal 10a, 10b, wherein said properties characterize at least one of: the communications capabilities of said terminal 10a, 10b, at least one physical parameter of said terminal 10a, 10b.

After said determination, in step 210, said base station 100 allocates one or more communications resources to said terminal 10a, 10b depending on said properties of said terminal 10a, 10b.

This process advantageously enables to allocate optimum communications resources to the terminals 10a, 10b on an individual, i.e. terminal-specific, basis. I.e., if each terminal 10a, 10b and the base station 100 supports various communications standards such as GSM, UMTS, LTE and WLAN, this defines a first degree of freedom for the step 210 of allocating communications resources.

For instance, if the base station 100 already serves numerous further terminals, which are not depicted by Figure 1 for simplicity, in a GSM mode, in step 210, the base station may advantageously determine to use a UMTS, LTE or WLAN mode or any combination thereof for serving the terminals 10a, 10b thus avoiding to overburden the GSM cell already serving said numerous further terminals.

Of course, it is also possible, that the base station 100 allocates the terminal 10a to UMTS operation, whereas the terminal 10b is allocated to WLAN operation. Any other allocation variants enabled by the transmitter and receiver technology of the involved devices 10a, 10b, 100 are also possible.

A further degree of freedom for resource allocation by the base station 100 is offered by allocating the terminals 10a, 10b to specific frequency bands. Depending on the communications standards supported by the devices 10a, 10b, 100, it is also possible for the base station to first determine specific frequency ranges or frequency bands in said step of allocating 210, regardless of the communications standard that, per definition, may use such specific frequency ranges or frequency bands. After the determination of said specific frequency ranges or frequency bands, further in step 210, the base station 100 may determine, which of the supported communications standards can operate on said specific frequency ranges or frequency bands, and it may allocate a respective standard to the specific terminals 10a, 10b.

Yet another degree of freedom for resource allocation is offered by choosing between different modulation schemes supported by the devices 10a, 10b, 100.

Advantageously, in step 210, any single one of the aforementioned degrees of freedom or any combination thereof may be employed by the base station 100 for resource allocation.

According to a particularly preferred embodiment, said step of allocating 210 comprises choosing one or more communications resources for communicating with said terminal 10a, 10b depending on energy efficiency associated with said communications resources.

A further preferred embodiment proposes that said base station 100 determines a distance d (Fig. 1) between the first terminal 10a and the base station 100, which can be accomplished by per se known methods. The determination of the distance d is illustrated by step 200a of the flowchart according to Figure 3b.

Further, after determining the distance d, the base station 100 also determines at least one of: a communications standard and a frequency band supported by said first terminal 10a for communicating with said base station 100, which is done in step 200b. Obviously, the steps 200a, 200b may also be performed simultaneously or in any other sequence.

After the steps 200a, 200b, the base station 100 allocates, step 210 of Figure 3b, at least one of a specific communications standard and a specific frequency band to said first terminal 10a depending on said distance d. For instance, since the distance d is comparatively small, base station 100 allocates a frequency band with a comparatively high carrier frequency to the first terminal 10a.

However, after performing the method according to Figure 3b for the second terminal 10b, the base station 100 allocates a frequency band with a comparatively low carrier frequency to second terminal 10b, since it is located further away from the base station 100, which is advantageous since lower frequencies are known to support a larger radio coverage.

The aforedescribed embodiment advantageously guarantees an operation of base station 100 with improved energy efficiency, because the higher carrier frequency is used for the first terminal 10a located close to the base station, which enables to operate the base station 100 with only low or moderate transmitting power for transmitting data to the first terminal 10a. However, for the second terminal 10b, which is located further away from the base station 100, a lower carrier frequency is allocated in step 210 (Figure 3b), which offers improved efficiency in that no excessive transmitting power has to be used by the base station 100 for transmission to the second terminal 10b.

In contrast to these embodiments, a conventional base station, which possibly allocates all terminals to the same (high) carrier frequency, regardless of their distance d to the base station, would require an increased transmission power for each downlink to the terminals thus not offering improved energy efficiency as obtained by the embodiments. According to a further embodiment, the base station 100 may define various sub-cells representing its radio coverage area, two of which are denoted in Figure 1 by the reference signs 101, 102.

A first sub-cell 101 has the first radius r1 and is operated by allocating comparatively high carrier frequencies to terminals 10a which are within said first sub-cell. This is in-line with the aim of increased energy efficiency, because due to the small radius r1 and correspondingly small distances d between the terminals 10a and the base station, said comparatively high carrier frequencies may be used without sacrificing energy efficiency.

However, for the second sub-cell 102, which has a larger radius r2 > r1, base station 100 preferably allocates lower carrier frequencies to the respective terminals 10b due to the increased efficiency of lower carrier frequencies over higher carrier frequencies in situations with large transmission distances > r1.

Generally, said step 210 of allocating comprises choosing one or more communications resources for communicating with said terminal 10a, 10b depending on energy efficiency associated with said communications resources. Thus, the energy efficiency of the base station 100 can be increased.

Figure 2 depicts a schematic block diagram of a base station 100 according to an embodiment. The base station 100 comprises processing means 110 configured to control an operation of the receiver 130 and the transmitter 140. A signal flow of received signals from the receiver 130 to the processing means 110 is symbolized by a block arrow. Likewise, signals to be transmitted by the base station 100 are represented by a block arrow connecting said processing means 110 with said transmitter 140.

Preferably, to benefit from a plurality of degrees of freedom during resource allocation 210 (Figure 3a), receiver 130 and transmitter 140 are configured to support different frequency bands and/or different communications standards such as GSM, UMTS, LTE, WLAN, WiMAX. It is also possible for the devices 130, 140 to even support short-range radio communication such as according to the Bluetooth standard and the like. Generally, devices 130, 140 can be implemented as multi-band/wideband (frequency) and/or multi-standard (GSM, UMTS, ..) capable devices. It is also possible to implement the devices 130, 140 to be able to simultaneously process different frequency bands, which may also be non-contiguous.

Base station 100 further comprises cell sensing means 120 configured to determine e.g. user distance r1, r2, relative velocity, blocked bands (i.e., frequency bands that may not be used) and/or which communications standards are supported by the terminals 10a, 10b within radio range of the base station 100.

Apart from controlling the devices 130, 140 in a per se known manner, the processing means 110 are configured to analyze cell sensing information received from the cell sensing means 120 and to evaluate the information obtained during steps 200, 200a, 200b, i.e. the properties of the mobile terminals 10a, 10b, their communications capabilities (supported standards, frequency bands, modulation schemes) and their physical parameters such as distance d to the base station 100, relative velocity with respect to base station 100, a remaining energy supply, e.g. of electrical energy, for the terminals 10a, 10b. Moreover, preferably, it is the processing means 110 which perform the steps of user-specific (i.e., terminal-specific) communications resource allocation taking aspects of energy efficiency and/or terminal capabilities into account.

Finally, the processing means 110 appropriately control the receiver 130 and the transmitter 140 to implement communications sessions with the terminals 10a, 10b in accordance with the resource allocation 210.

According to an embodiment, the base station 100 may also be considered as a so-called cognitive base station, because it is configured to sense and monitor a radio cell 101, 102 via its cell sense means 120 (Figure 2) and to handle/address different frequency bands and communication standards via its receiver 130 and transmitter 140.

According to a further embodiment, the base station may also be configured to indicate to the terminal 10a, 10b a desired change of the communications standard and/or one or more frequency bands or modulation schemes used for data transmission, e.g. if another communications standard and/or frequency bands or modulation scheme would provide an increased degree of energy efficiency. This indication may be forwarded to the terminals 10a, 10b depending on any operational data available at the base station 100 such as e.g. aggregated distance data r1, r2 of the terminals 10a, 10b, their relative speeds and/or directions of movement or the like. Such indication may also be forwarded to the terminals 10a, 10b depending on a data transmission rate to be used. E.g., currently, LTE communications may be used since the user requires a high data rate, whereas later on, there may only be voice data transmissions and the base station 100 could thus switch to GSM communications possibly also in another better suited frequency band. After receiving respective indications from the base stations, the terminals may switch to the indicated communications standard(s) and/or frequency band(s).

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method of operating a base station (100) of a cellular communications network said method comprising the following step:
- determining (200) which communications standards are supported by at least one terminal (10a, 10b) that is capable of communicating with said base station (100) **characterized by** said method comprising the further steps of determining a distance (d) between said base station (100) and said at least one terminal (10a, 10b),
- allocating (210) one or more communications resources to said at least one terminal (10a, 10b) depending on said communications standards supported by said at least one terminal (10a, 10b) and said distance (d) between said base station (100) and said at least one terminal (10a, 10b).

2. Method according to claim 1, wherein said step of determining (200) further comprises determining which frequency bands are supported by said terminal (10a, 10b).

3. Method according to one of the preceding claims, wherein said step of determining (200) further comprises determining at least one of: a relative speed of said terminal (10a, 10b) with respect to the base station (100), a remaining energy supply of said terminal (10a, 10b) for the communications with the base station (100).

4. Method according to one of the preceding claims, wherein said step of allocating (210) comprises choosing one or more communications resources for communicating with said terminal (10a, 10b) depending on an energy efficiency associated with said communications resources.

5. Method according to one of the preceding claims, wherein said step of allocating (210) comprises allocating at least one of: a communications standard, a frequency band, a modulation scheme.

6. Method according to one of the preceding claims, wherein said base station (100) allocates at least one of a specific communications standard and a specific frequency band to said terminal (10a) depending on said distance (d).

7. Method according to one of the preceding claims, wherein said base station (100) allocates communications standards and/or frequency bands associated with a first carrier frequency to a first terminal (10a), and wherein said base station (100) allocates communications standards and/or frequency bands associated with a second carrier frequency, which is lower than said first carrier frequency, to a second terminal (10b), which is located further away from the base station (100) than the first terminal (10a).

8. Method according to one of the preceding claims, wherein said step of allocating (210) is performed depending on an energy efficiency associated with a communications process with a specific terminal (10a) and/or depending on an overall energy efficiency associated with a plurality of communications processes with respective terminals (10a, 10b).

9. Base station (100) of a cellular communications network, said base station (100) is configured to:
- determine (200) which communications standards are supported by at least one terminal (10a, 10b) with which it is capable of communicating **characterized by** said base station being further configured (100) to determine a distance (d) from said at least one terminal (10a, 10b), and to
- allocate (210) one or more communications resources to said at least one terminal (10a, 10b) depending on said communications standards supported by said at least one terminal (10a, 10b) and said distance (d) from said at least one terminal (10a, 10b).

10. Base station (100) according to claim 9, wherein said base station (100) comprises a receiver (130) and a transmitter (140), said receiver (130) and transmitter (140) configured to communicate with at least one terminal according to at least one communications standard and/or on at least one frequency band, and processing means (110) to control an operation of said receiver (130) and said transmitter (140).

11. Base station (100) according to one of the claims 9 to 10, wherein said base station (100) comprises cell sensing means (120) configured to determine at least one of: which communications standards are supported by said terminal (10a, 10b), which frequency bands are supported by said terminal (10a, 10b).

12. Base station (100) according to one of the claims 9 to 11, wherein said base station (100) is configured to determine (200) at least one of: a relative speed of said terminal (10a, 10b) with respect to the base station (100), a remaining energy supply of said terminal (10a, 10b) for the communications with the base station (100).

13. Base station (100) according to one of the claims 9 to 12, wherein said base station (100) is configured to choose one or more communications resources for communicating with said terminal (10a, 10b) depending on an energy efficiency associated with said communications resources.

14. Base station (100) according to one of the claims 9 to 13, wherein said base station (100) is configured to allocate at least one of: a communications standard, a frequency band, a modulation scheme.

15. Base station (100) according to one of the claims 9 to 14, wherein said base station (100) is configured to allocate at least one of a specific communications standard and a specific frequency band to said terminal (10a) depending on said distance (d).

## Patentansprüche

1. Verfahren zum Betreiben einer Basisstation (100) eines zellularen Kommunikationsnetzwerks, wobei das besagte Verfahren den folgenden Schritt umfasst:
- Ermitteln (200), welche Kommunikationsstandards von mindestens einem Endgerät, (10a, 10b), welches fähig ist, mit der besagten Basisstation (100) zu kommunizieren, unterstützt werden, **dadurch gekennzeichnet, dass** das besagte Verfahren weiterhin die folgenden Schritte umfasst:
- Ermitteln einer Entfernung (d) zwischen der besagten Basisstation (100) und dem besagten mindestens einen Endgerät (10a, 10b),
- Zuteilen (210) einer oder mehrerer Kommunikationsressourcen an das besagte mindestens eine Endgerät (10a, 10b) in Abhängigkeit von den besagten von dem besagten mindestens einen Endgerät (10a, 10b) unterstützten Kommunikationsstandards und der besagten Entfernung (d) zwischen der besagten Basisstation (100) und dem besagten mindestens einen Endgerät (10a, 10b).

2. Verfahren nach Anspruch 1, wobei der besagte Schritt des Ermittelns (200) weiterhin das Ermitteln, welche Frequenzbänder von dem besagten Endgerät (10a, 10b) unterstützt werden, umfasst.

3. Verfahren nach einem der vorstehenden Ansprüche, wobei der besagte Schritt des Ermittelns (200) weiterhin das Ermitteln mindestens entweder einer Relativgeschwindigkeit des besagten Endgeräts (10a, 10b) in Bezug auf die Basisstation (100), oder einer restlichen Energieversorgung des besagten Endgeräts (10a, 10b) für die Kommunikationen mit der Basisstation (100) umfasst.

4. Verfahren nach einem der vorstehenden Ansprüche, wobei der besagte Schritt des Zuteilens (210) das Auswählen einer oder mehrerer Kommunikationsressourcen für die Kommunikation mit dem besagten Endgerät (10a, 10b) in Abhängigkeit von einer mit den besagten Kommunikationsressourcen assoziierten Energieeffizienz umfasst.

5. Verfahren nach einem der vorstehenden Ansprüche, wobei der besagte Schritt des Zuteilens (210) das Zuteilen mindestens entweder eines Kommunikationsstandards, eines Frequenzbands oder eines Modulationsschemas umfasst.

6. Verfahren nach einem der vorstehenden Ansprüche, wobei die besagte Basisstation (100) dem besagten Endgerät (10a) in Abhängigkeit von der besagten Entfernung (d) mindestens entweder einen spezifischen Kommunikationsstandard oder ein spezifisches Frequenzband (d) zuteilt.

7. Verfahren nach einem der vorstehenden Ansprüche, wobei die besagte Basisstation (100) einem ersten Endgerät (10a) Kommunikationsstandards und/oder Frequenzbänder, die mit einer ersten Trägerfrequenz assoziiert sind, zuteilt, and wobei die besagte Basisstation (100) einem zweiten Endgerät (10b), welches weiter entfernt von der Basisstation (100) angeordnet ist als das erste Endgerät (10a), Kommunikationsstandards und/oder Frequenzbänder, die mit einer zweiten Trägerfrequenz, welcher niedriger ist als die besagte erste Trägerfrequenz, assoziiert sind, zuteilt.

8. Verfahren nach einem der vorstehenden Ansprüche, wobei der besagte Schritt des Zuteilens (210) in Abhängigkeit von einer mit einem Kommunikationsprozess mit einem spezifischen Endgerät (10a) assoziierten Energieeffizienz und/oder in Abhängigkeit von einer mit einer Mehrzahl von Kommunikationsprozessen mit jeweiligen Endgeräten (10a, 10b) assoziierten Gesamt-Energieeffizienz durchgeführt wird.

9. Basisstation (100) eines zellularen Kommunikationsnetzwerks, wobei die besagte Basisstation (100) für das Durchführen der folgenden Schritte ausgelegt ist:
- Ermitteln (200), welche Kommunikationsstandards von mindestens einem Endgerät, (10a, 10b), mit welcher sie fähig ist, zu kommunizieren, **dadurch gekennzeichnet, dass** die besagte Basisstation (100) weiterhin dafür konfiguriert ist, eine Entfernung (d) von dem besagten mindestens einen Endgerät (10a, 10b) zu ermitteln, und
- Zuteilen (210) einer oder mehrerer Kommunikationsressourcen an das besagte mindestens eine Endgerät (10a, 10b) in Abhängigkeit von den besagten von dem besagten mindestens einen Endgerät (10a, 10b) unterstützten Kommunikationsstandards und der besagten Entfernung (d) von dem besagten mindestens einen Endgerät (10a, 10b).

10. Basisstation (100) nach Anspruch 9, wobei die besagte Basisstation (100) einen Empfänger (130) und einen Sender (140), wobei der besagte Empfänger (130) und der besagte Sender (140) für die Kommunikation mit mindestens einem Endgerät gemäß mindestens einem Kommunikationsstandard und/oder auf mindestens einem Frequenzband konfiguriert ist, und Verarbeitungsmittel (110) zur Steuerung einer Operation des besagten Empfängers (130) und des besagten Senders (140) umfasst.

11. Basisstation (100) nach einem der Ansprüche 9 bis 10, wobei die besagte Basisstation (100) Zellsensormittel (120) umfasst, die dafür konfiguriert sind, entweder zu ermitteln, welche Kommunikationsstandards von dem besagten Endgerät (10a, 10b) unterstützt werden, oder welche Frequenzbänder von dem besagten Endgerät (10a, 10b) unterstützt werden.

12. Basisstation (100) nach einem der Ansprüche 9 bis 11, wobei die besagte Basisstation (100) dafür konfiguriert ist, entweder zu ermitteln (200): eine Relativgeschwindigkeit des besagten Endgeräts (10a, 10b) in Bezug auf die Basisstation (100), oder eine restliche Energieversorgung des besagten Endgeräts (10a, 10b) für die Kommunikationen mit der Basisstation (100).

13. Basisstation (100) nach einem der Ansprüche 9 bis 12, wobei die besagte Basisstation (100) dafür konfiguriert ist, eine oder mehrere Kommunikationsressourcen zur Kommunikation mit dem besagten Endgerät (10a, 10b) in Abhängigkeit von einer mit den besagten Kommunikationsressourcen assoziierten Energieeffizienz auszuwählen.

14. Basisstation (100) nach einem der Ansprüche 9 bis 13, wobei die besagte Basisstation (100) dafür konfiguriert ist, mindestens entweder einen Kommunikationsstandard, ein Frequenzband oder ein Modulationsschema zuzuteilen.

15. Basisstation (100) nach einem der Ansprüche 9 bis 14, wobei die besagte Basisstation (100) dafür konfiguriert ist, dem besagten Endgerät (10a) in Abhängigkeit von der besagten Entfernung (d) mindestens einen spezifischen Kommunikationsstandard oder ein spezifisches Frequenzband zuzuteilen.

## Revendications

1. Procédé de fonctionnement d'une station de base (100) d'un réseau de communication cellulaire, ledit procédé comprenant les étapes suivantes :
- déterminer (200) quelles normes de communication sont prises en charge par au moins un terminal (10a, 10b) qui peut communiquer avec ladite station de base (100) **caractérisé en ce que** ledit procédé comprend les étapes suivantes :
- déterminer une distance (d) entre ladite station de base (100) et ledit au moins un terminal (10a, 10b),
- allouer (210) une ou plusieurs ressources de communication audit au moins un terminal (10a, 10b) en fonction desdites normes de communication prises en charge par ledit au moins un terminal (10a, 10b) et de ladite distance (d) entre ladite station de base (100) et ledit au moins un terminal (10a, 10b).

2. Procédé selon la revendication 1, dans lequel ladite étape de détermination (200) consiste en outre à déterminer quelles bandes de fréquences sont prises en charge par ledit terminal (10a, 10b).

3. Procédé selon l'une des revendications précédentes, dans lequel ladite étape de détermination (200) comprend en outre la détermination d'au moins un élément parmi : une vitesse relative dudit terminal (10a, 10b) par rapport à la station de base (100), une alimentation en énergie restante dudit terminal (10a, 10b) pour les communications avec la station de base (100).

4. Procédé selon l'une des revendications précédentes, dans lequel ladite étape d'allocation (210) comprend le choix d'une ou de plusieurs ressources de communication pour communiquer avec ledit terminal (10a, 10b) en fonction d'une efficacité énergétique associée auxdites ressources de communication.

5. Procédé selon l'une des revendications précédentes, dans lequel ladite étape d'allocation (210) comprend l'allocation d'au moins un élément parmi : une norme de communication, une bande de fréquences, un schéma de modulation.

6. Procédé selon l'une des revendications précédentes, dans lequel ladite station de base (100) alloue au moins un élément parmi une norme de communication spécifique et une bande de fréquences spécifique audit terminal (10a) en fonction de ladite distance (d).

7. Procédé selon l'une des revendications précédentes, dans lequel ladite station de base (100) alloue des normes de communication et/ou des bandes de fréquences, associées à une première fréquence porteuse, à un premier terminal (10a), et dans lequel ladite station de base (100) alloue des normes de communication et/ou des bandes de fréquences associées à une deuxième fréquence porteuse, qui est inférieure à ladite première fréquence porteuse, à un deuxième terminal (10b), qui est plus éloigné de la station de base (100) que le premier terminal (10a).

8. Procédé selon l'une des revendications précédentes, dans lequel ladite étape d'allocation (210) est exécutée en fonction d'une efficacité énergétique associée à un processus de communication avec un terminal spécifique (10a) et/ou en fonction d'une efficacité énergétique globale associée à une pluralité de processus de communication avec des terminaux respectifs (10a, 10b).

9. Station de base (100) d'un réseau de communication cellulaire, ladite station de base (100) étant configurée pour :
- déterminer (200) quelles normes de communication sont prises en charge par au moins un terminal (10a, 10b) avec lequel elle peut communiquer, **caractérisée en ce que** ladite station de base est en outre configurée (100) pour déterminer une distance (d) à partir dudit au moins un terminal (10a, 10b), et pour
- allouer (210) une ou plusieurs ressources de communication audit au moins un terminal (10a, 10b) en fonction desdites normes de communication prises en charge par ledit au moins un terminal (10a, 10b) et de ladite distance (d) à partir dudit au moins un terminal (10a, 10b).

10. Station de base (100) selon la revendication 9, dans laquelle ladite station de base (100) comprend un récepteur (130) et un émetteur (140), lesdits récepteur (130) et émetteur (140) étant configurés pour communiquer avec au moins un terminal conformément à au moins un procédé de communication et/ou sur au moins une bande de fréquences et des moyens de traitement (110) pour commander un fonctionnement dudit récepteur (130) et dudit émetteur (140).

11. Station de base (100) selon l'une des revendications 9 à 10, dans laquelle ladite station de base (100) comprend des moyens de détection de cellules (120) configurés pour déterminer : quelles normes de communication sont prises en charge par ledit terminal (10a, 10b) et/ou quelles bandes de fréquences sont prises en charge par ledit terminal (10a, 10b).

12. Station de base (100) selon l'une des revendications 9 à 11, dans laquelle ladite station de base (100) est configurée pour déterminer (200) au moins un élément parmi : une vitesse relative dudit terminal (10a, 10b) par rapport à la station de base (100), une alimentation en énergie restante dudit terminal (10a, 10b) pour les communications avec la station de base (100).

13. Station de base (100) selon l'une des revendications 9 à 12, dans laquelle ladite station de base (100) est configurée pour choisir une ou plusieurs ressources de communication pour communiquer avec ledit terminal (10a, 10b) en fonction d'une efficacité énergétique associée auxdites ressources de communication.

14. Station de base (100) selon l'une des revendications 9 à 13, dans laquelle ladite station de base (100) est configurée pour allouer au moins un élément parmi :
une norme de communication, une bande de fréquences, un schéma de modulation.

15. Station de base (100) selon l'une des revendications 9 à 14, dans laquelle ladite station de base (100) est configurée pour allouer au moins un élément parmi une norme de communication spécifique et une bande de fréquences spécifique audit terminal (10a) en fonction de ladite distance (d).
